# EUROPEAN PATENT SPECIFICATION

(11) **EP 2 747 909 B1**
(45) Date of publication and mention of the grant of the patent: **16.03.2016**
(21) Application number: 12756799.8
(22) Date of filing: 01.08.2012
(51) Int. Cl.: B09B 3/00, C05F 17/02

(54) **WASTE DISPOSAL APPARATUS**
ABFALLENTSORGUNGSVORRICHTUNG
APPAREIL CONÇU POUR ÉLIMINER DES DÉCHETS

(30) Priority: 28.10.2011 GB 201118744
(43) Date of publication of application: 02.07.2014
(73) Proprietor: Sage-Passant, Peter, Kiln Farm Milton Keynes MK11 3ER (GB)
(72) Inventor: Sage-Passant, Peter, Kiln Farm Milton Keynes MK11 3ER (GB)
(74) Representative: Raynor, Simon Mark
(86) International application number: PCT/GB2012/000629
(87) International publication number: WO 2013/061013

(56) References cited:
- WO-A1-2007/075053
- JP-A- 7 328 594
- JP-A- 9 029 211
- JP-A- 2003 097 999

## Description

The present invention relates to a waste disposal apparatus and in particular but not exclusively to a waste disposal apparatus for disposing of unwanted food waste using aerobic decomposition. The invention also relates to a method of sensing the quantity of waste materials in the waste disposal apparatus, and disposing of the materials using aerobic decomposition.

Aerobic decomposition is a well-known method for disposing of unwanted food waste. It is useful in that it diverts food waste from landfill, which is generally agreed to be expensive, environmentally unfriendly and unsustainable.

The present invention allows for the aerobic decomposition of food waste at the point of production, using microorganisms.

Machines exist that allow aerobic decomposition using microorganisms at the point of food waste production. However, there are a number of disadvantages associated with these existing machines.

It is important not to overload this type of waste disposal apparatus. This is because if insufficient air is available, the waste materials can become to wet and heavy and the aerobic digestion process then slows down. If the machine is seriously overloaded this can lead to blockage and can result in the machine having to be manually unloaded, which is a time-consuming, unpleasant and expensive operation.

Many existing machines rely on weight-sensing load cells to measure the amount of waste material in the decomposition chamber and warn the operator when the machine is full and unable to accept any more food waste. Typically, four load sensors are provided, which are linked to the four feet of the machine. These load cells sense the gross weight of the machine and a control circuit then subtracts the net weight of the machine to calculate the weight of the waste material in the decomposition chamber. When the decomposition chamber is full an indicator signal an alarm signal is generated to warn the operator not to load any more waste material into the machine.

A disadvantage of this system is that it is expensive and complicated, requiring four load cells. It is also prone to false alarms if, for example, items are placed on top of the machine or someone leans on the machine while loading. The machine must also be levelled correctly before use to ensure that the load cells are evenly loaded. If the machine is not correctly levelled, one or more of the load sensors may be overloaded resulting in false readings. This can cause a particular problem when a machine has to be moved for cleaning or maintenance, after which it must be re-levelled before use.

Another difficulty with these designs is that there is nothing to physically prevent an operator from continuing to load food waste after the overload sensors have been actuated. Document JP 029211 A discloses a garbage treatment apparatus provided with a drying chamber and a decomposition chamber. These two chambers are separated by a rotating plate on which garbage accumulates for drying. The axis of the separating plate is fitted with two weight sensors giving an indication of the degree of drying of the garbage.

It is an object of the present invention to provide a waste disposal apparatus that mitigates one or more of the disadvantages described above.

According to one aspect of the present invention there is provided a waste disposal apparatus for disposing of waste materials using aerobic decomposition, the apparatus including a decomposition chamber having a waste inlet for receiving waste materials, a waste outlet for discharging waste materials from the chamber after aerobic decomposition thereof, a sieve element located within the decomposition chamber between the inlet and the outlet, and a load sensor for sensing the quantity of waste material within the decomposition chamber, said load sensor being configured to sense the load supported by the sieve element.

The apparatus is able to sense the load in the decontamination chamber and thereby help to avoid overloading. Because the load sensor senses the load supported by the sieve element only one load sensor is required, thus reducing the complexity and cost of the machine. Errors caused by placing objects on the machine or leaning against it during use are also avoided. Another advantage of using a single load sensor is that the machine does not require levelling.

The apparatus can be used for the disposal of biodegradable waste materials, for example food waste. This allows the waste materials to be disposed of easily, quickly and hygienically and avoids the environmental and economic disadvantages associated with disposing of those waste materials in landfill sites.

Advantageously, the load sensor is configured to sense deformation of the sieve element in response to a supported load.

Preferably, the load sensor is connected to a lowermost portion of the sieve element. That is, it is in direct or indirect contact with the lowermost portion of the sieve element.

In a first embodiment, the load sensor is connected to a portion of the sieve element by a push rod that passes through a wall of the decomposition chamber. The apparatus preferably includes a sealing element that provides a water-tight seal between the push rod and the decomposition chamber wall.

In a second embodiment, the load sensor is connected to the sieve element via a wall of the decomposition chamber, said wall including a contact element that engages a portion of the sieve element.

The waste disposal apparatus preferably includes a control system that is operably connected to the load sensing device, the control system being constructed and arranged to detect a fully loaded condition when the load sensed by the load sensor reaches a predetermined value.

Advantageously, the control system is operably connected to an alarm device and is configured to generate an alarm signal in response to sensing a fully loaded condition.

Advantageously, the waste disposal apparatus includes a closure member for closing the inlet and sealing the decomposition chamber, and a locking device for locking the closure member in a closed condition, a load sensing device for sensing the quantity of waste materials in the decomposition chamber, the control system being constructed and arranged to lock the closure member in the closed condition in response to sensing a fully loaded condition.

By locking the lid when the decomposition chamber is fully loaded, the risk of overloading and potential blocking of the chamber can be reduced or avoided. This helps to avoid the need for manually clearing a blockage.

Advantageously, the control system is configured to instigate an energy saving operating mode in response to sensing an unloaded condition.

Advantageously, the waste disposal apparatus includes a stirrer for stirring waste materials in the chamber, and a stirring load sensor for sensing the load on the stirrer during stirring. Advantageously, the stirrer includes an electric stirrer motor and the stirring load sensor is constructed and arranged to sense the electrical load on the stirrer motor during stirring.

Preferably, the control system is operably connected to the stirrer motor and is constructed and arranged to sense a blocked condition in which stirring of the waste material is substantially prevented, and to apply a de-blocking operational control signal to the stirrer motor in response to sensing a blocked condition. This control signal may for example cause rotation of the stirrer to reverse one or more times in order to clear the blockage.

Advantageously, the control system is constructed and arranged to activate the alarm device and/or deactivate the stirrer motor in response to sensing a sustained blocked condition. This allows the blockage to be cleared manually.

The control system is preferably constructed and arranged to release the locking device when the quantity of waste materials in the chamber falls below a second predetermined value. This second predetermined value may be a percentage of the full capacity, for example about 80% of the full capacity.

Advantageously, the waste disposal apparatus includes a dosing system for automatically dosing waste material in the decomposition chamber with a working fluid. This ensures that the working fluid is applied effectively at the correct times, and that the quantity of working fluid is controlled to avoid wastage.

Preferably, the dosing system includes a bag-in-box type supply of working fluid, in which the working fluid is contained within a flexible polymeric bag within a rigid box-like container made, for example, of cardboard. This is a very convenient way to store the working fluid and it allows the supply of working fluid to be replenished easily and quickly. Degradation of the working fluid while in storage is also reduced, since the bag of the bag-in-box container is hermetically sealed.

The dosing system preferably includes a diaphragm pump for delivering working fluid to the decomposition chamber. This allows the quantity of working fluid added to the decomposition chamber to be accurately controlled.

Advantageously, the dosing system is constructed and arranged to deliver a predetermined quantity of working fluid to the decomposition chamber each time the closure member is opened.

Advantageously, the working fluid includes a blend of bacteria, free enzymes and plant extracts. More specifically, the working fluid preferably includes a blend of the following substances, by weight: preservative 1-10%, surfactant 1-10%, enzyme 0.1-1.0%, glycol 0.1-1.0%, plant extract 0.1-1.0%, fragrance 0.1-1.0%, thickener 0.1-1.0%, bacteria 0.01-1.0%.

Advantageously, the decomposition chamber and optionally the closure member are made substantially or wholly of a polymeric material, optionally polyethylene. This improves the thermal insulation of the decomposition chamber, thus reducing or eliminating the need for external heating (some heat being generated by decomposition of the waste materials). If heating is required, this can be provided using a low power heating unit, thus reducing the energy demands of the apparatus.

The use of polymeric materials considerably reduces the weight and possibly also the size of the apparatus. It is therefore possible to design the apparatus as a mobile unit and it relatively easy to relocate the apparatus when required. The moulded components are also less likely to leak than traditional welded metal components, and they are easy to clean and maintain.

The decomposition chamber and optionally the closure member are preferably rotationally moulded components, this manufacturing process being particularly suitable for large components of this type as it allows large wall thicknesses to be formed, which increase the level of thermal insulation. The use of moulded polymeric components is also very cost effective as compared for example to stainless steel components.

The waste disposal apparatus may include a heater for heating the decomposition chamber. The heater is preferably thermostatically controlled and it may for example consist of a low power heat mat that attached to the base of the decomposition chamber.

Advantageously, the waste disposal apparatus includes a gas duct having an inlet connected to the decomposition chamber and an exterior outlet, an extractor fan for drawing gas through the duct and a filter for filtering gas drawn through the duct, the fan being constructed and arranged to operate when the closure member is in an open condition, thereby extracting gas from the decomposition chamber. This prevents odorous gases and vapours from escaping into the atmosphere when the lid is opened.

Advantageously, the waste disposal apparatus includes a bracket mounted adjacent the waste inlet for supporting a complementary waste container, the bracket being constructed and arranged to enable a waste container to be supported and pivoted about the bracket in order to tip waste materials from the waste container into the decomposition chamber. This reduces the effort needed to tip waste materials into the decomposition chamber and reduces the risk of spilling the waste materials.

The waste disposal apparatus may include one or more complementary waste containers adapted to be supported by the bracket. The complementary waste container preferably includes a lid for sealing the container.

Advantageously, the waste disposal apparatus includes a water recycling system for extracting water from waste materials in the waste outlet and returning the extracted water to the decomposition chamber. This reduces both water usage and the amount of treated waste materials discharged into the drain. Preferably, the waste disposal apparatus includes a water duct for delivering water to the decomposition chamber and a valve for controlling the flow of water through the duct.

According to another aspect of the invention there is provided a method of sensing the quantity of waste material in a waste disposal apparatus comprising a decomposition chamber having a waste inlet, a waste outlet, and a sieve element located within the decomposition chamber between the inlet and the outlet, the method comprising sensing the load supported by the sieve element.

Advantageously, the method comprises sensing deformation of the sieve element in response to a supported load.

The method preferably includes detecting a fully loaded condition by sensing when the load reaches a predetermined value.

Advantageously, the method includes generating an alarm signal in response to sensing a fully loaded condition.

Advantageously, the method includes locking a closure member for the inlet in a closed condition in response to sensing a fully loaded condition.

Advantageously, the control system instigates an energy saving operating mode in response to sensing an unloaded condition.

Advantageously, the method includes disposing of waste materials by aerobic decomposition, in which the waste materials are placed in a decomposition chamber, a working fluid that includes a blend of bacteria, free enzymes and plant extracts is applied to the waste materials, the waste materials are stirred to encourage aerobic decomposition thereof, and decomposed waste materials are discharged from the chamber.

The waste materials may for example be waste food products.

Advantageously, the method is implemented using an apparatus according to any one of the preceding statements of invention.

Certain embodiments of the invention will now be described by way of example with reference to the accompanying drawings, in which:
Figure 1 is an isometric view showing the left and front sides of a waste disposal machine with an open lid;
Figure 2 is an isometric view showing the right and front sides of the waste disposal machine with a right side panel removed;
Figure 3 is an isometric view of the waste disposal machine from above, with the top removed;
Figure 4 is an isometric view of the waste disposal machine from the front with a door removed;
Figure 5 is a side view of a food waste bin;
Figures 6, 7 and 8 are side views showing waste food being transferred from a food waste bin into the waste disposal machine;
Figure 9 is a schematic diagram showing the control system of the waste disposal machine;
Figures 10 and 10a are schematic diagrams showing a first configuration of a load cell in the waste disposal machine, figure 10a being at a larger scale, and
Figures 11 and 11 a are schematic diagrams showing a second configuration of a load cell in the waste disposal machine, figure 11a being at a larger scale.

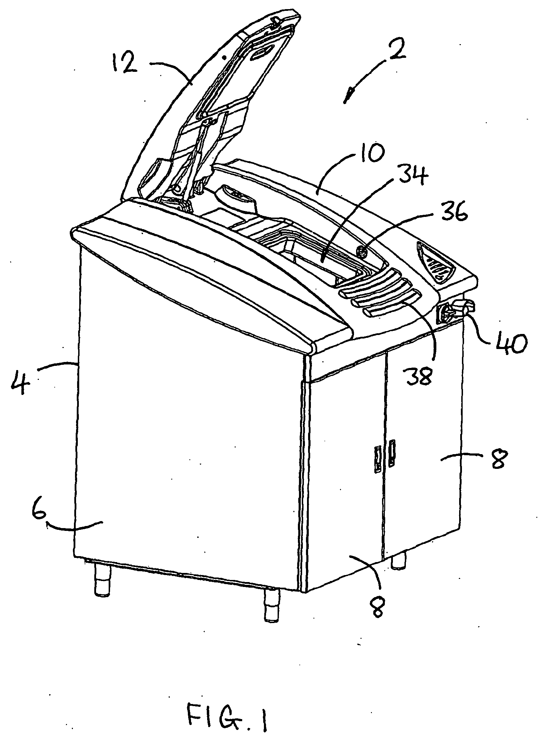

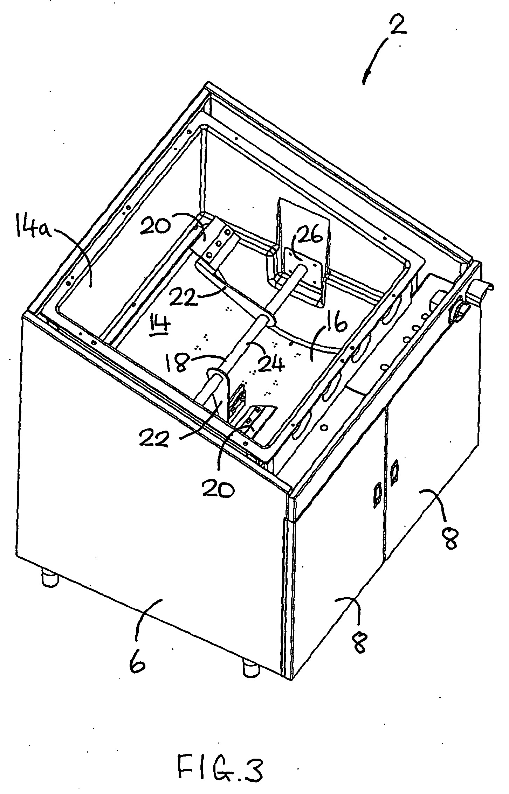

As shown in figures 1-4, the waste disposal apparatus 2 includes a cabinet 4 with two side panels 6, a rear panel 7 and two doors 8 forming the front part of the cabinet. The top side of the cabinet is closed by an inclined top cover 10 having a hinged lid 12.

Within the cabinet there is mounted a decomposition chamber 14 having a four-sided upper part 14a and a substantially semi-cylindrical lower part 14b. This decomposition chamber 14 is preferably made from a polymeric material, for example polyethylene, preferably by rotational moulding. A drain outlet (not shown) is provided in the lower part of the chamber.

Located adjacent the base of the decomposition chamber 14 is a semi-cylindrical sieve element comprising a perforated wall or a mesh plate 16. This is usually made of thin stainless steel plate (typically with a thickness of about 0.9mm). The perforations or holes in this wall or mesh plate are designed to allow water and other liquids to pass through into the drain outlet, while retaining bulky waste materials in the chamber.

A stirring device 18 is located within the decomposition chamber 14. The stirring device includes a number of paddles 20 attached by arms 22 to a horizontal shaft 24. The shaft is mounted for rotation in bearings 26 on opposite sides of the chamber 14. One end of the shaft 24 extends through the side of the chamber and is attached to a pulley wheel 28. Rotation of the stirrer device is driven by an electric motor 30 in the lower part of the cabinet 4 via a drive belt 32.

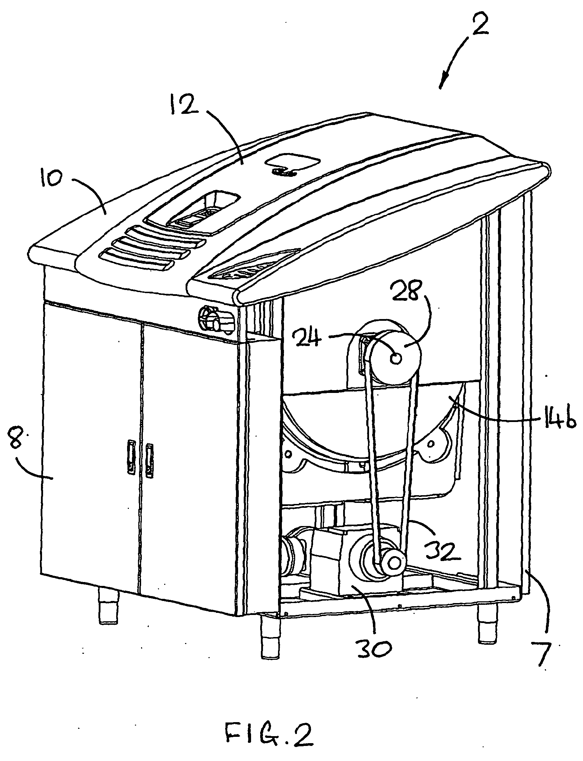

The top cover 10 includes a waste inlet 34 through which waste materials can be loaded into the decomposition chamber 14. The hinged lid 12 serves as a closure member that may be opened as shown in figure 1 to allow access to the waste inlet 34, or closed as shown in figure 2 to seal the decomposition chamber 14. The lid 12 and the top cover 10 are preferably made from a polymeric material, for example polyethylene, preferably by rotational moulding.

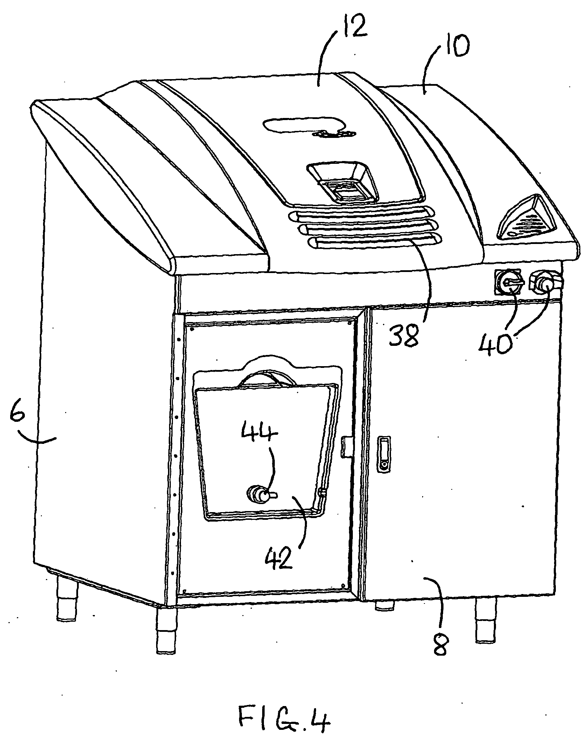

Mounted within the top cover 10 adjacent the waste inlet is a locking device 36, for example an electrically actuated latching bolt, for locking the lid 12 in a closed condition. The top cover 10 also includes one or more brackets 38 for supporting a waste container, as will be described in greater detail below. Controls 40 for controlling operation of the waste disposal apparatus are provided on the front part of the cabinet above the doors 8. Concealed within the cabinet 4 behind one of the doors 8 is a compartment for receiving a container of working fluid 42, as shown in figure 4. The container 42 is preferably a bag-in-box type, having a sealed bag of fluid supported by a surrounding box or carton and having a tap or valve 44 through which working fluid can be drawn from the bag.

The working fluid includes a blend of bacteria, free enzymes and plant extracts, which are effective to promote aerobic decomposition of the waste materials including food waste, oils and greases, and which help to eliminate odours. The working fluid preferably includes a blend of the following substances, by weight: preservative 1-10%, surfactant 1-10%, enzyme 0.1-1.0%, glycol 0.1-1.0%, plant extract 0.1-1.0%, fragrance 0.1-1.0%, thickener 0.1-1.0%, bacteria 0.01-1.0%.

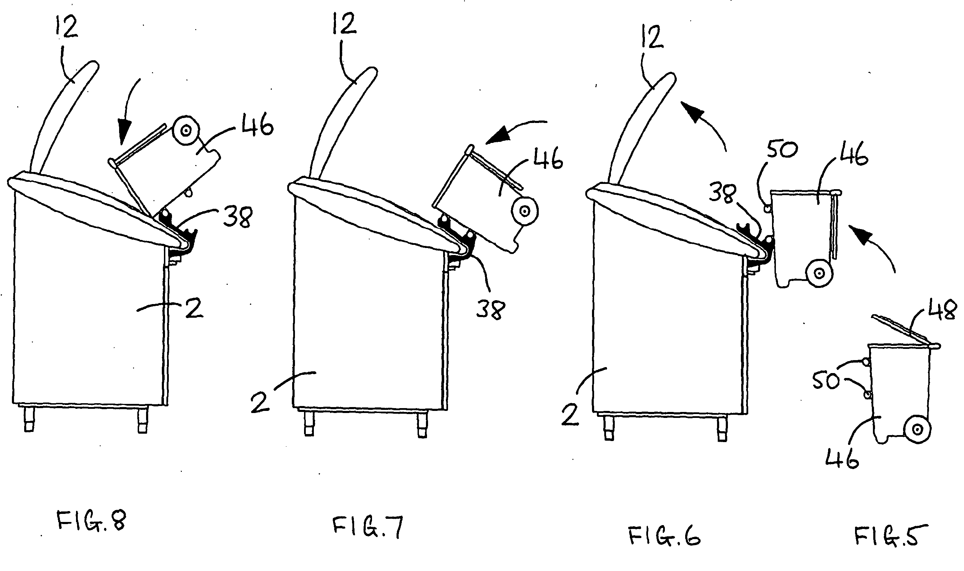

Figures 5 to 8 show how waste material can be easily transferred into the waste disposal apparatus 2 from a waste container 46. The waste container 46 consists of a substantially conventional wheeled bin 47 with a water-tight lid 48. Integrally moulded pivot points 50 are provided on one face of the container, which are designed to engage with the support bracket 38 on the top plate 10 of the waste disposal apparatus 2. In the example shown in the drawings, the waste container has two pivot points 50, which support the bin in upper and lower locations. It will be understood however that more or fewer pivot points could alternatively be provided.

In order to empty the waste container 46, it is lifted to the position shown in figure 6 so that the lower pivot point 50 is hooked onto the support bracket 38. It is then tipped forwards through the position shown in figure 7 in which both pivot points engage the bracket 38 to the inverted position shown in figure 8, where it is supported only by the upper pivot point. After the contents of the container have been tipped into the waste disposal apparatus, the waste container can be lowered and lifted down from the apparatus by reversing these steps. The support bracket 38 thus serves to support the container as the waste materials are tipped into the waste disposal apparatus, and ensures that the container is correctly aligned with the waste inlet to avoid spilling the waste materials.

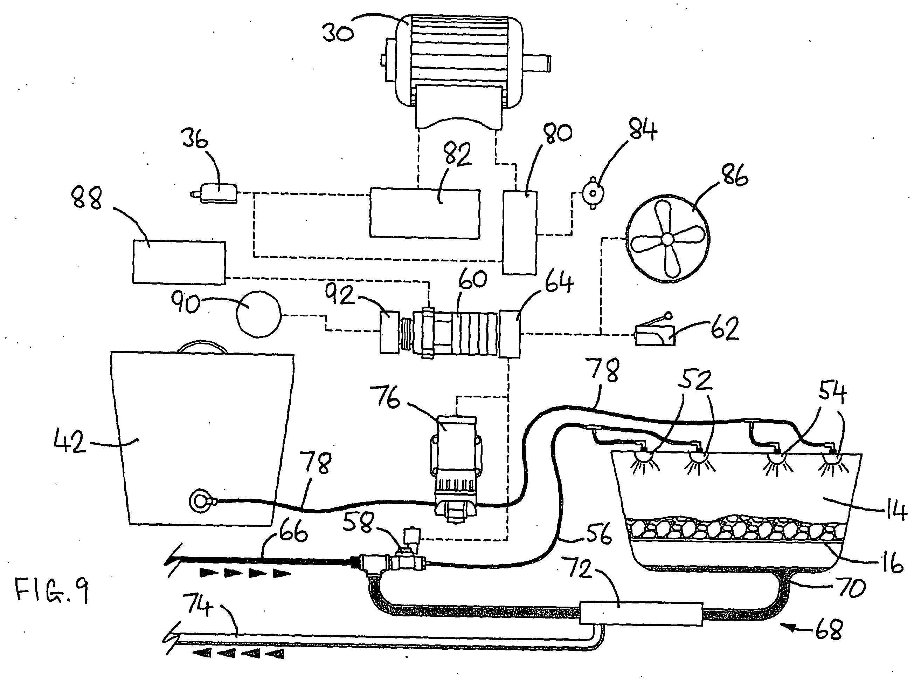

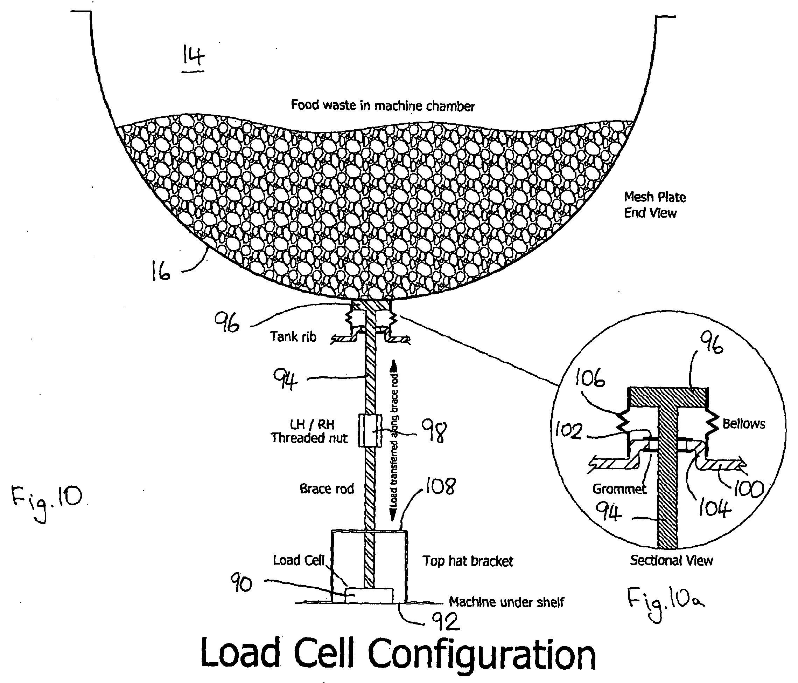

The operational parts and the control system of the waste disposal apparatus are shown schematically in figures 9 and 10.

A plurality of spray nozzles 52, 54 are located within the decomposition chamber 14. Some of these nozzles 52 are designed to spray waste materials within the chamber 14 with water, which is supplied to the nozzles 52 through water supply lines 56. The flow of water to the nozzles 52 is controlled by a solenoid valve 58, which is activated by a central control unit 60. The central control unit 60 is linked to a lid switch 62 that senses when the lid 12 is closed, and only activates the valve 58 to supply water to the decomposition chamber 14 when the lid is closed. The central control unit 60 is also connected to a timer 64 that measure the time for which the valve is open is order to control the amount of water supplied to the chamber.

Water can be supplied to the chamber either from an external water supply 66 or from a waste water recycling system 68. The waste water recycling system 68 is connected to the drain outlet 70 of the decomposition chamber 14 and includes a separator 72 that separates some of the water from the decomposed waste materials flowing from the chamber 14, the remaining portion of the waste materials flowing through an outlet pipe 74 to a drain.

The other nozzles 54 are designed to spray waste materials in the chamber 14 with a working fluid that includes a blend of bacteria, free enzymes and plant extracts. This working fluid is drawn from the fluid container 42 and supplied to the nozzles 54 by a diaphragm pump 76 via a fluid supply line 78. The pump 76 is connected to the central control unit 60, which controls its operation. The pump 76 is activated only when the lid 12 is opened and then only for a predetermined period of time determined by the timer 64, in order to control the amount of fluid supplied to the decomposition chamber 14.

The central control unit 60 also controls operation of the motor 30 that drives the stirrer 18, and activates the stirrer only when the lid 12 is closed, as sensed by the lid switch 62. Electrical power is supplied to the motor 30 via an electrical inverter 80 and the load on the motor 30 as it drives the stirrer 18 is detected by a current sensing relay 82. The load on the motor depends on the amount of waste materials in the decomposition chamber 14, and when the chamber is loaded to its maximum capacity the relay 82 activates the latching bolt 36 to lock the lid 12 closed. The lid remains locked until some of the waste materials in the chamber have been digested and the load on the motor has fallen. The latching bolt 36 is then released, allowing the lid to be opened so that more waste materials can be loaded into the chamber.

Any overloading of the chamber 14 that completely or substantially prevents rotation of the stirrer 18 can be detected by the inverter 80. When an overload condition is sensed, the central control unit 60 first attempts to release the blockage by reversing the rotation direction of the stirrer one or more times. If a sustained blocked condition is sensed that cannot be freed by reversing the stirrer, the control unit 60 shuts down the motor 30, releases the latching bolt 36 and generates an alarm signal via a sounder 84 so that the blockage can be cleared manually.

The central control unit 60 is operably connected to an extractor fan 86, which is connected via a duct (not shown) to the decomposition chamber 14 and is arranged to extract air from the chamber and discharge it through a carbon filter (not shown). Operation of the fan 86 is controlled by the lid switch 62, so that the fan is activated whenever the lid 12 is opened. This creates a partial vacuum in the decomposition chamber 14, causing ambient air to flow into the chamber through the waste inlet 34 and preventing odorous gases and vapours from escaping into the atmosphere.

The central control unit 60 is also operably connected to a thermostatically controlled heater 88 for heating the waste materials in the decomposition chamber 14 to an ideal temperature for aerobic decomposition (typically about 43C). The heater 88 may for example consist of a low energy heater mat that is mounted against a wall or the base of the decomposition chamber 14.

The mesh plate 16 is connected to a load cell 90 that senses the deflection of the mesh plate 16 when the decomposition chamber 14 is loaded with waste material. The deflection of the mesh plate 16 is related to the weight of undigested waste material supported by the plate and the relationship between the load and the deflection of the mesh plate 16 can be established easily by a calibration process. The weight of waste materials loaded into the waste disposal apparatus can therefore be determined from the output of the load cell 90. This information and optionally other data, for example time and date, can then be logged by a data logger device 92 connected to the load cell 90 and transmitted to the central control unit 60.

A first possible configuration of the load cell 90 is shown in figures 10 and 10a. The load cell 90 is mounted on the machine under-shelf 92 in the bottom part of the waste disposal machine. It is connected by a vertical brace rod 94 to a head plate 96 that is in contact with the underside of the mesh plate 16. The brace rod 94 includes an upper part and a lower part which are provided with opposite-handed screw threads and connected to one another by a left-hand/right-hand threaded nut 98. This nut 98 can be rotated to adjust the overall length of the brace rod 94, so that the head plate 96 rests lightly against the underside of the mesh plate 16 when the decomposition chamber 14 is empty.

The brace rod 94 extends at its upper end through a hole in the lower wall 100 of the decomposition chamber 14, preferably via a grommet 102 in a strengthening rib 104. A resilient bellows sleeve 106, for example made of rubber, seals the head plate 96 to the rib 104 to prevent liquid escaping from the decomposition chamber 14. At its lower end, the brace rod 94 passes through a top hat bracket 108 that is attached to the machine under-shelf 92.

In use, waste material, for example food waste, is tipped into the decomposition chamber 14 from a waste container 46. The lid 12 is then closed. Closing of the lid 12 is sensed by the lid switch 62, whereupon the waste material in the chamber 14 is sprayed with water and working fluid through the nozzles 52, 54. The motor 30 is activated to operate the stirrer 18 and if necessary the heater 88 is turned on to heat the waste materials to the ideal decomposition temperature.

The weight of the waste materials supported by the mesh plate 16 is measured continuously by the load cell 90. If the load measured by the load cell 90 reaches a predetermined level corresponding to a fully-loaded condition, a signal is generated, for example by an indicator light and/or a sounder, which indicates to the operator that the machine is full. This helps to ensure that the machine is not accidentally overloaded. However, if the machine is overloaded operation of the machine is halted and a second alarm signal is generated to indicate that some waste materials must be removed from the machine before operation can recommence.

If the lid 12 is opened while the machine is in operation, the motor 30 is shut down to deactivate the stirrer 18 and the extractor fan 86 is turned on to prevent odours escaping into the atmosphere. The weight of any waste materials added to the chamber is sensed and logged by the load cell 90 and the data logger 92. After the waste materials have been added, the lid 12 is closed whereupon the motor 30 is reactivated and the fan 86 is deactivated. The waste material is again sprayed with water and working fluid through the nozzles 52, 54.

If the load cell 90 detects that the decomposition chamber 14 is empty of waste materials, and if the lid 12 has not been opened for a period exceeding a predetermined value, for example three hours, the control unit 60 instigates an energy saving mode in which, for example, water is sprayed less frequently, the motor 30 driving the stirrer 18 runs less frequently and the power supply to the heater 88 is reduced or turned off. Energy and water usage are thus reduced. If the lid 12 is opened the control unit 60 returns the machine to normal operating mode.

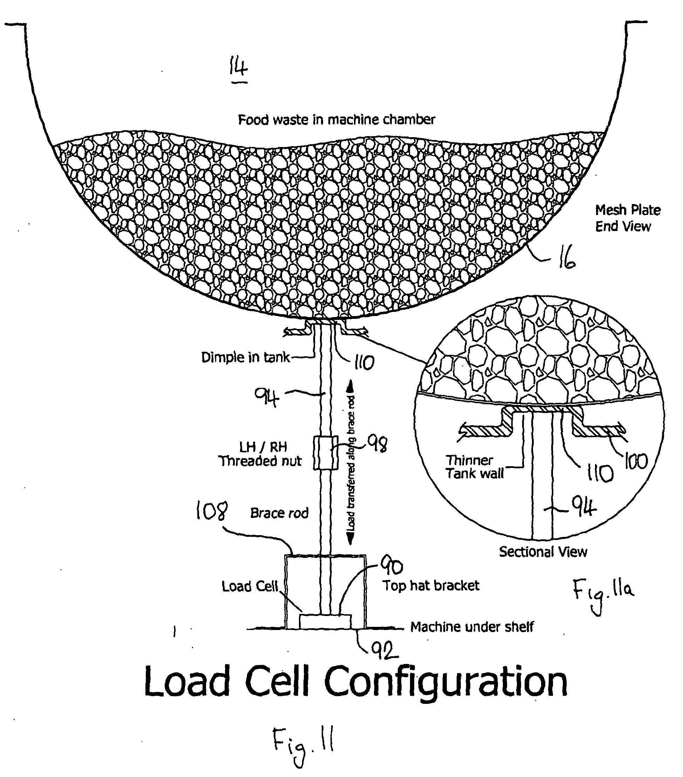

A second possible configuration of the load cell 90 is shown in figures 11 and 11a. The load cell 90 is mounted on the machine under-shelf 92 in the bottom part of the waste disposal machine. It is connected by a vertical brace rod 94 to a contact element 110, which comprises a dimple formed in the lower wall 100 of the decomposition chamber 14.

The contact element 110 is in contact with the underside of the mesh plate 16 and the portion of the lower wall 100 that formes the contact element 110 has a reduced thickness, allowing it to flex in response to the load carried by the mesh plate 16. An advantage of this arrangement over the first configuration shown in figures 10 and 10a is that it avoids the need for a water-tight seal, since the push rod 94 no longer passes through the wall 100.

The brace rod 94 includes an upper part and a lower part which are provided with opposite-handed screw threads and connected to one another by a left-hand/right-hand threaded nut 98. This nut 98 can be rotated to adjust the overall length of the brace rod 94, so that the upper end of the push rod rests lightly against the underside of the contact element 110. At its lower end, the brace rod 94 passes through a top hat bracket 108 that is attached to the machine under-shelf 92.

The load sensor 90 is connected to the sieve element 16 via the wall 100 of the decomposition chamber and the push rod 64. In use, the weight of the waste materials supported by the mesh plate 16 is measured continuously by the load cell 90. A signal representing the measured weight is sent to the control unit 60, which controls operation of the machine as previously described.

The resistance to rotation of the stirrer is sensed by the current sensing relay 82. When the chamber is full, the relay fires the latching bolt 36 to lock the lid and prevent further materials being added to the chamber. As the waste is digested, it falls through the mesh plate 16 into the base of the decomposition chamber 14 from where it flows through the drain outlet 70 into a drainage system. If required, some water can be extracted from the waste fluids by the separator 72 and recycled into the chamber through the water nozzles 52. When the load in the chamber has fallen below a predetermined level, which is preferably about 80% of the maximum capacity of the chamber, the latching bolt is released so that additional waste material can be added to the chamber. If an overload situation is detected, this is resolved by the procedures described above.

## Claims

1. A waste disposal apparatus for disposing of waste materials using aerobic decomposition, the apparatus including a decomposition chamber (14) having a waste inlet (34) for receiving waste materials, a waste outlet (70) for discharging waste materials from the chamber after aerobic decomposition thereof, **characterized in that** the apparatus comprises a sieve element (16) located within the decomposition chamber (14) between the inlet and the outlet, and a load sensor (90) for sensing the quantity of waste material within the decomposition chamber, said load sensor (90) being configured to sense the load supported by the sieve element (16).

2. A waste disposal apparatus according to claim 1, wherein the load sensor (90) is configured to sense deformation of the sieve element (16) in response to a supported load.

3. A waste disposal apparatus according to claim 2, in which the load sensor is connected to a lowermost portion of the sieve element.

4. A waste disposal apparatus according to claim 2 or claim 3, in which the load sensor (90) is connected to either (a) a portion of the sieve element (16) by a push rod (94) that passes through a wall (100) of the decomposition chamber (16) or (b) the sieve element (16) via a wall (100) of the decomposition chamber (16), said wall (100) including a contact element (110) that engages a portion of the sieve element (16).

5. A waste disposal apparatus according to any one of the preceding claims, including a control system (60) that is operably connected to the load sensing device (90), the control system (60) being constructed and arranged to detect a fully loaded condition when the load sensed by the load sensor reaches a predetermined value, and wherein optionally the control system (60) is operably connected to an alarm device (84) and is configured to generate an alarm signal in response to sensing a fully loaded condition.

6. A waste disposal apparatus according to claim 5, including a closure member (12) for closing the inlet and a locking device (36) for locking the closure member in a closed condition, the control system (60) being constructed and arranged to lock the closure member in the closed condition in response to sensing a fully loaded condition.

7. A waste disposal apparatus according to claim 5 or claim 6, wherein the control system (60) is configured to instigate an energy saving operating mode in response to sensing an unloaded condition.

8. A waste disposal apparatus according to any one of the preceding claims, including a stirrer (18) for stirring waste materials in the decomposition chamber (14), a stirrer motor (30) for driving the stirrer, and means (80) for sensing the electrical load on the stirrer motor during stirring, wherein the control system (60) is operably connected to the stirrer motor (30) and is constructed and arranged to sense a blocked condition in which stirring of the waste material is substantially prevented, and to apply a de-blocking operational control signal to the stirrer motor (30) in response to sensing a blocked condition.

9. A method of sensing the quantity of waste material in a waste disposal apparatus comprising a decomposition chamber (14) having a waste inlet (34), a waste outlet (70), and a sieve element (16) located within the decomposition chamber between the inlet and the outlet, the method comprising sensing the load supported by the sieve element (16).

10. A method according to claim 9, comprising sensing deformation of the sieve element (16) in response to a supported load.

11. A method according to claim 9 or claim 10, including detecting a fully loaded condition by sensing when the load reaches a predetermined value.

12. A method according to any one of claims 9 to 11, including generating an alarm signal in response to sensing a fully loaded condition.

13. A method according to any one of claims 9 to 11, including locking a closure member (12) for the inlet in a closed condition in response to sensing a fully loaded condition.

14. A method according to any one of claims 9 to 13, wherein the control system (60) instigates an energy saving operating mode in response to sensing an unloaded condition.

15. A method according to any one of claims 9 to 14, wherein the waste materials are disposed of by aerobic decomposition, in which the waste materials are placed in the decomposition chamber (14), a working fluid that includes a blend of bacteria, free enzymes and plant extracts is applied to the waste materials, the waste materials are stirred to encourage aerobic decomposition thereof, and decomposed waste materials are discharged from the chamber.

## Patentansprüche

1. Abfallentsorgungsvorrichtung zur Entsorgung von Abfallmaterialien unter Verwendung aerober Zersetzung, wobei die Vorrichtung eine Zersetzungskammer (14) beinhaltet, die einen Abfalleinlass (34) zur Aufnahme von Abfallmaterialien, einen Abfallauslass (70) zum Ablassen von Abfallmaterialien aus der Kammer nach ihrer aeroben Zersetzung hat; **dadurch gekennzeichnet, dass** die Vorrichtung ein Siebelement (16), das sich in der Zersetzungskammer (14) zwischen dem Einlass und dem Auslass befindet, und einen Lastsensor (90) zum Erfassen der Abfallmaterialmenge in der Zersetzungskammer aufweist, wobei der genannte Lastsensor (90) zum Erfassen der von dem Siebelement (16) getragenen Last konfiguriert ist.

2. Abfallensorgungsvorrichtung nach Anspruch 1, wobei der Lastsensor (90) zum Erfassen einer Verformung des Siebelements (16) als Reaktion auf eine getragene Last konfiguriert ist.

3. Abfallentsorgungsvorrichtung nach Anspruch 2, bei der der Lastsensor mit einem untersten Teil des Siebelements verbunden ist.

4. Abfallentsorgungsvorrichtung nach Anspruch 2 oder Anspruch 3, bei der der Lastsensor (90) entweder mit (a) einem Teil des Siebelements (16), durch eine Stößelstange (94), die durch eine Wand (100) der Zersetzungskammer (16) verläuft, oder (b) mit dem Siebelement (16), über eine Wand (100) der Zersetzungskammer (16), wobei die genannte Wand (100) ein Kontaktelement (110) beinhaltet, das mit einem Teil des Siebelements (16) in Eingriff ist, verbunden ist.

5. Abfallentsorgungsvorrichtung nach einem der vorhergehenden Ansprüche mit einem Steuersystem (60), das funktionell mit der Lasterfassungsvorrichtung (90) verbunden ist, wobei das Steuersystem (60) konstruiert und angeordnet ist, um eine voll belastete Bedingung zu erkennen, wenn die von den Lastsensor erfasste Last einen vorbestimmten Wert erreicht, und wobei wahlweise das Steuersystem (60) funktionell mit einer Alarmvorrichtung (84) verbunden ist und zum Erzeugen eines Alarmsignals als Reaktion auf das Erfassen einer voll belasteten Bedingung konfiguriert ist.

6. Abfallentsorgungsvorrichtung nach Anspruch 5, die ein Verschlusselement (12) zum Schließen des Einlasses und eine Verriegelungsvorrichtung (36) zum Verriegeln des Verschlusselements in einer geschlossenen Bedingung beinhaltet, wobei das Steuersystem (60) zum Verriegeln des Verschlusselements in der geschlossenen Bedingung als Reaktion auf das Erfassen einer voll belasteten Bedingung konstruiert und angeordnet ist.

7. Abfallentsorgungsvorrichtung nach Anspruch 5 oder Anspruch 6, wobei das Steuersystem (60) zum Einleiten eines Energiesparbetriebsmodus als Reaktion auf das Erfassen einer unbelasteten Bedingung konfiguriert ist.

8. Abfallentsorgungsvorrichtung nach einem der vorhergehenden Ansprüche, die einen Rührer (18) zum Rühren von Abfallmaterialien in der Zersetzungskammer (14), einen Rührermotor (30) zum Antreiben des Rührers und eine Einrichtung (80) zum Erfassen der elektrischen Last am Rührermotor während des Rührens beinhaltet, wobei das Steuersystem (60) funktionell mit dem Rührermotor (30) verbunden ist und zum Erfassen einer blockierten Bedingung, in der das Rühren des Abfallmaterials im Wesentlichen verhindert wird, und zum Anlegen eines funktionellen Entblockierungssteuersignals an den Rührermotor (30) als Reaktion auf das Erfassen einer blockierten Bedingung konstruiert und angeordnet ist.

9. Verfahren zum Erfassen einer Abfallmaterialmenge in einer Abfallentsorgungsvorrichtung, die eine Zersetzungskammer (14) aufweist, die einen Abfalleinlass (34), einen Abfallauslass (70), und ein Siebelement (16), das sich in der Zersetzungskammer zwischen dem Einlass und dem Auslass befindet, hat, wobei das Verfahren das Erfassen der von dem Siebelement (16) getragenen Last aufweist.

10. Verfahren nach Anspruch 9, das das Erfassen einer Verformung des Siebelements (16) als Reaktion auf eine getragene Last aufweist.

11. Verfahren nach Anspruch 9 oder Anspruch 10, das das Erkennen einer voll belasteten Bedingung durch Erfassen, wenn die Last einen vorbestimmten Wert erreicht, beinhaltet.

12. Verfahren nach einem der Ansprüche 9 bis 11, das das Erzeugen eines Alarmsignals als Reaktion auf das Erfassen einer voll belasteten Bedingung beinhaltet.

13. Verfahren nach einem der Ansprüche 9 bis 11, das das Verriegeln eines Verschlusselements (12) für den Einlass in einer geschlossenen Bedingung als Reaktion auf das Erfassen einer voll belasteten Bedingung beinhaltet.

14. Verfahren nach einem der Ansprüche 9 bis 13, wobei das Steuersystem (60) als Reaktion auf das Erfassen einer unbelasteten Bedingung einen Energiesparbetriebsmodus einleitet.

15. Verfahren nach einem der Ansprüche 9 bis 14, wobei die Abfallmaterialien durch aerobe Zersetzung entsorgt werden, bei der die Abfallmaterialien in die Zersetzungskammer (14) gegeben werden, ein Arbeitsfluid, das ein Gemisch aus Bakterien, freien Enzymen und Pflanzenextrakten beinhaltet, auf die Abfallmaterialien angewendet wird, die Abfallmaterialien gerührt werden, um ihre aerobe Zersetzung zu fördern, und zersetzte Abfallmaterialien aus der Kammer abgelassen werden.

## Revendications

1. Appareil d'élimination de déchets destiné à éliminer des déchets par décomposition aérobie, l'appareil comportant une chambre de décomposition (14) présentant une entrée de déchets (34) destinée à recevoir des déchets, une sortie de déchets (70) destinée à évacuer des déchets depuis la chambre, après leur décomposition aérobie, **caractérisé en ce que** l'appareil comprend un élément formant tamis (16) situé à l'intérieur de la chambre de décomposition (14) entre l'entrée et la sortie, et un détecteur de charge (90) destiné à détecter la quantité de déchets à l'intérieur de la chambre de décomposition, ledit détecteur de charge (90) étant conçu pour détecter la charge supportée par l'élément formant tamis (16).

2. Appareil d'élimination de déchets selon la revendication 1, dans lequel le détecteur de charge (90) est conçu pour détecter une déformation de l'élément formant tamis (16) en réponse à une charge supportée.

3. Appareil d'élimination de déchets selon la revendication 2, dans lequel le détecteur de charge est relié à la partie la plus basse de l'élément formant tamis.

4. Appareil d'élimination de déchets selon la revendication 2 ou la revendication 3, dans lequel le détecteur de charge (90) est relié soit à (a) une partie de l'élément formant tamis (16), par une tige de poussée (94) qui passe à travers une paroi (100) de la chambre de décomposition (16), soit à (b) l'élément formant tamis (16) par l'intermédiaire d'une paroi (100) de la chambre de décomposition (16), ladite paroi (100) comprenant un élément de contact (110) qui entre en prise avec une partie de l'élément formant tamis (16).

5. Appareil d'élimination de déchets selon l'une quelconque des revendications précédentes, comprenant un système de commande (60) qui est fonctionnellement relié au dispositif détecteur de charge (90), le système de commande (60) étant constitué et agencé pour détecter un état de pleine charge lorsque la charge détectée par le détecteur de charge atteint une valeur prédéterminée, et dans lequel le système de commande (60) est éventuellement relié de manière fonctionnelle à un dispositif d'alarme (84) et est conçu pour émettre un signal d'alarme en réponse à la détection d'un état de pleine charge.

6. Appareil d'élimination de déchets selon la revendication 5, comprenant un élément de fermeture (12) destiné à fermer l'entrée et un dispositif de verrouillage (36) destiné à verrouiller l'élément de fermeture à l'état fermé, le système de commande (60) étant constitué et agencé pour verrouiller l'élément de fermeture à l'état fermé en réponse à la détection d'un état de pleine charge.

7. Appareil d'élimination de déchets selon la revendication 5 ou la revendication 6, dans lequel le système de commande (60) est conçu pour déclencher un mode de fonctionnement en économie d'énergie en réponse à la détection d'un état déchargé.

8. Appareil d'élimination de déchets selon l'une quelconque des revendications précédentes, comprenant un agitateur (18) destiné à agiter des déchets dans la chambre de décomposition (14), un moteur d'agitateur (30) destiné à entraîner l'agitateur, et un moyen (80) destiné à détecter la charge électrique du moteur d'agitateur pendant l'agitation, dans lequel le système de commande (60) est fonctionnellement relié au moteur d'agitateur (30) et est constitué et agencé pour détecter un état bloqué dans lequel l'agitation des déchets est sensiblement empêchée, et pour appliquer un signal opérationnel de commande de déblocage au moteur d'agitateur (30) en réponse à la détection d'un état bloqué.

9. Procédé de détection de la quantité de déchets dans un appareil d'élimination de déchets comprenant une chambre de décomposition (14) présentant une entrée de déchets (34), une sortie de déchets (70) et un élément formant tamis (16) situé à l'intérieur de la chambre de décomposition entre l'entrée et la sortie, le procédé comprenant la détection de la charge supportée par l'élément formant tamis (16).

10. Procédé selon la revendication 9, comprenant la détection d'une déformation de l'élément formant tamis (16) en réponse à une charge supportée.

11. Procédé selon la revendication 9 ou la revendication 10, comprenant la détection d'un état de pleine charge, consistant à détecter quand la charge atteint une valeur prédéterminée.

12. Procédé selon l'une quelconque des revendications 9 à 11, comprenant l'émission d'un signal d'alarme en réponse à la détection d'un état de pleine charge.

13. Procédé selon l'une quelconque des revendications 9 à 11, comprenant le verrouillage d'un élément de fermeture (12) de l'entrée à l'état fermé, en réponse à la détection d'un état de pleine charge.

14. Procédé selon l'une quelconque des revendications 9 à 13, dans lequel le système de commande (60) déclenche un mode de fonctionnement en économie d'énergie en réponse à la détection d'un état déchargé.

15. Procédé selon l'une quelconque des revendications 9 à 14, dans lequel les déchets sont éliminés par décomposition aérobie, dans lequel les déchets sont placés dans la chambre de décomposition (14), un fluide de travail qui comprend un mélange de bactéries, d'enzymes libres et d'extraits végétaux est appliqué sur les déchets, les déchets sont agités pour favoriser leur décomposition aérobie, et les déchets décomposés sont évacués de la chambre.
